# EUROPEAN PATENT APPLICATION

(11) **EP 2 228 729 A1**
(43) Date of publication of application: **15.09.2010**
(21) Application number: 09290175.0
(22) Date of filing: 11.03.2009
(51) Int. Cl.: G06F 13/40

(54) **Process to design a rear transition module RTM of an advanced telecom computing architecture ATCA board**

(71) Applicant: Alcatel Lucent, 75008 Paris (FR)
(72) Inventor: Cravec, Didier, 22700 Louannec (FR)
(74) Representative: Sayettat, Julien Christian

(57) **Abstract**

The invention concerns a process to design a Rear Transition Module RTM (1) of an Advanced Telecom Computing Architecture ATCA board, said process providing for the designing of a generic carrier (2) and a plurality of mezzanine cards (3), each of said mezzanine cards comprising a main functional device (4) for the RTM module (1), said main functional device being connected to Input/Output ports (5) which are integrated on said mezzanine card and said mezzanine cards further integrating a hot-swappable interface connector (6) to said generic carrier, wherein some of said mezzanine cards are implemented on said generic carrier according to the RTM functionalities needed for the board. The invention also concerns a RTM module (1) and an ATCA board.

## Description

The invention relates to a process to design a Rear Transition Module RTM (hereafter RTM module) of an Advanced Telecom Computing Architecture ATCA board (hereafter ATCA board), a RTM module and an ATCA board.

The ATCA board is specified according to the official designations of the PCI Industrial Computer Manufacturers Group (PICMG - http://www.picmg.org/) to be used in an ATCA shelf. In particular, the ATCA board comprises a Printed Circuit Board (PCB) comprising a Front Board interconnected to a RTM module through a Zone-3 connector, said RTM module being plugged into the back of the shelf in slot locations that match the Front Board.

With the general trend to increase feature density, the RTM modules are hosting more and more complex features because they are regarded more and more like an extension of the Front Board.

Initially, RTM modules were mainly expected to provide rear connectivity: the RTM module design was very simple (limited to physical connections routed to faceplate connectors). But RTM modules were also a way to customize the features of a Front Board, and multiple variants of RTM modules were designed per customer need. Consequently, each supplier is defining RTM modules per proprietary implementations, which also affects the Front Board implementation.

For example, an existing solution allows to meet on a RTM module front plate up to two hot-swappable Hard Disk Drives (HDD) and static Input/Output (I/O) port connectivity. But, mechanic for two HDDs takes a lot of space on the front plate which reduces the area for I/O-port connectivity for customers who need only one HDD. Moreover, the configuration of the HDD and the I/O-port cannot be customized.

Now, with RTM modules becoming more and more complex and intelligent, there is a business case for modularity on RTM modules. In the current RTM module designs, there are two ways to introduce modularity:
- PCB static modularity consists in making a PCB that is capable of hosting all interfaces/features/components, and then to derive multiple RTM modules, by removing the components that a particular customer does not need;
- mezzanine static modularity consists in hosting a small none hot-swappable daughter board on the RTM module PCB and to derive multiple variants of equipment based upon presence/absence of these daughter boards.

Those embodiments are not fully satisfactory because they do not propose a solution to obtain a dynamic modularity which is hot-swappable and manageable easily in a cost effective manner.

The invention aims to propose such a solution with, according to a first aspect, a process to design a Rear Transition Module RTM of an Advanced Telecom Computing Architecture ATCA board, said process providing for the designing of a generic carrier and a plurality of mezzanine cards, each of said mezzanine cards comprising a main functional device for the RTM module, said main functional device being connected to Input/Output ports which are integrated on said mezzanine card and said mezzanine cards further integrating a hot-swappable interface connector to said generic carrier, wherein some of said mezzanine cards are implemented on said generic carrier according to the RTM functionalities needed for the board.

Thus, the invention proposes a standardized framework (form factor and interface definition) to be able to customize RTM functionality without changing the full RTM module, notably in order to obtain a modular I/O port connectivity feature.

According to a second aspect, the invention proposes an Advanced Telecom Computing Architecture ATCA Rear Transition Module RTM comprising a generic carrier on which mezzanine cards are implemented, each of said mezzanine cards comprising a main functional device for the RTM module and a hot-swappable interface connector, said main functional device being both connected to said generic carrier by means of the hot swappable interface connector and to Input/Output ports which are integrated on said mezzanine card.

According to a third aspect, the invention proposes an Advanced Telecom Computing Architecture ATCA board integrating an Advanced Telecom Computing Architecture ATCA Rear Transition Module RTM, said module comprising a generic carrier on which mezzanine cards are implemented, each of said mezzanine cards comprising a main functional device for the RTM module and a hot-swappable interface connector, said main functional device being both connected to said generic carrier by means of the hot swappable interface connector and to Input/Output ports which are integrated on said mezzanine card.

Other aspects and advantages of the invention will become apparent in the following description made with reference to the appended figures, wherein:
- figure 1 represents a generic architecture of mezzanine cards according to the invention;
- figures 2 both represent an embodiment to connect a mezzanine card to a generic carrier;
- figure 3 represents the configuration of a RTM module comprising four mezzanine cards according to figure 1;
- figures 4 each represents one embodiment of a mezzanine card according to the generic architecture of figure 1.

The invention proposes a process to design a RTM module 1 of an ATCA board with a higher level of modularity and configurability. To do so, the process provides for the designing of a generic carrier 2 and a plurality of mezzanine cards 3. In particular, the generic carrier 2 and the mezzanine cards 3 are standardized as regards form factor and interface definition.

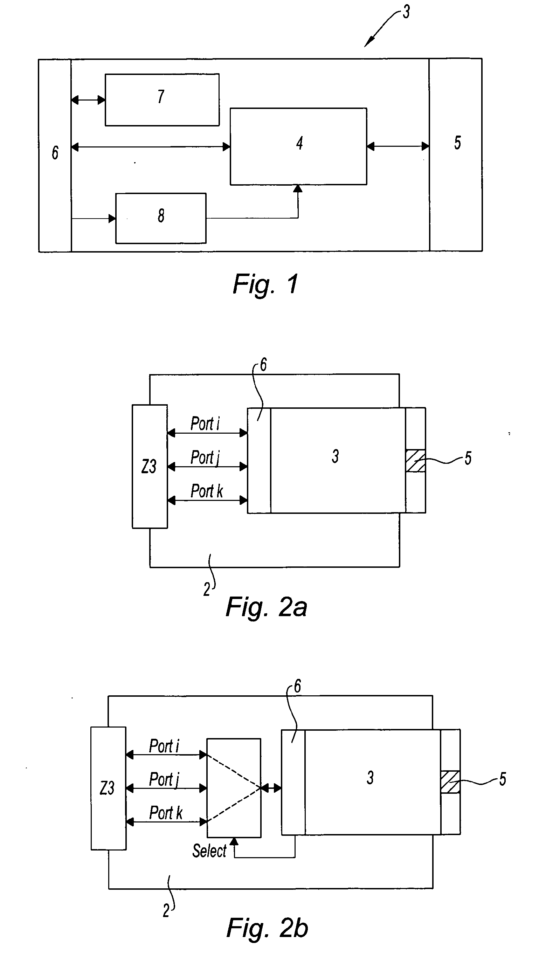

According to figure 1, each mezzanine card 3 comprises a main functional device 4 for the RTM module, said main functional device being connected to I/O ports 5 which are integrated on said mezzanine card. In addition, mezzanine cards 3 integrate a hot-swappable interface connector 6 to the generic carrier 2.

Thus, by means of the hot-swappable connection of some of said mezzanine cards on the generic carrier 2 according to the RTM functionalities needed for the board, it is possible to customize such functionalities without changing the full RTM module 1.

Indeed, the invention permits to reduce the number of RTM module variants by introducing the generic carrier concept. Thus, the development cost is reduced with lead time and time to market: the suppliers can offer a generic RTM carrier 2 and RTM mezzanine cards 3 that system integrators will be able to assemble quickly to build the customer solution.

In the embodiment of figure 1, the generic architecture of mezzanine cards 3 further integrates a hardware management device 7 connected to the hot-swappable interface connector 6. In addition, a DC/DC converter 8 can be integrated on such architecture if needed by the main functional device 4, between the hot-swappable interface connector 6 and the main functional device 4.

According to several embodiments, the main functional device 4 can be chosen amongst a Serial Attached Small Computer System Interface SAS expander 4a, a Giga Ethernet controller GE NIC 4b, a SAS Hard Disk Drive HDD 4c, a Solid State Drive SSD controller 4d, a E1/T1 transformer 4e. Thus, each of those functionalities can be integrated on the RTM module 1.

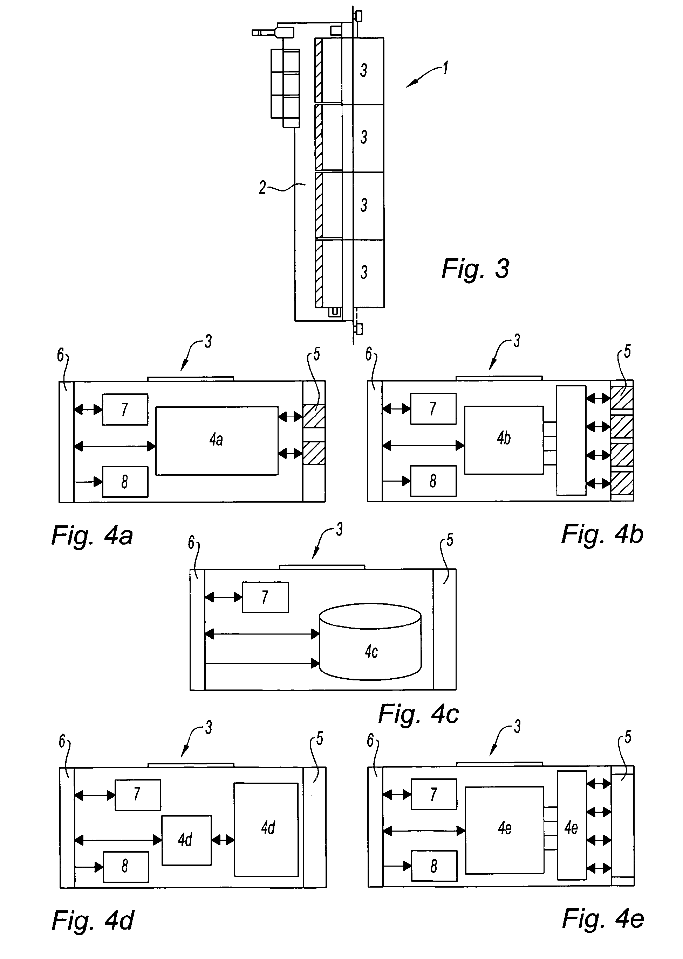

In relation with figures 4, the mezzanine card 3 according to the generic architecture of figure 1 can integrate the necessary components for the following main functional devices 4:
- a SAS expander 4a (figure 4a);
- a GE NIC 4b (figure 4b);
- a HDD 4c (figure 4c);
- a SSD controller 4d (figure 4d); and
- a E1/T1 transformer 4e (figure 4e).

In relation with figure 3, we describe below a RTM module 1 comprising a generic carrier 2 on which mezzanine cards 3 are implemented, each of said mezzanine cards comprising a main functional device 4 for the RTM module 1 and a hot-swappable interface connector 6, said main functional device being both connected to said generic carrier by means of the hot swappable interface connector 6 and to Input/Output ports 5 which are integrated on said mezzanine card. In particular, the mezzanine cards 3 are then hot-swappable on the generic carrier 2.

On the represented RTM module 1, four mezzanine cards 3 are implemented on the generic carrier 2. In addition, each mezzanine card supports standard SAS HDD 2.5" and I/O ports. The design of this RTM module 1 can then be integrated in an ATCA board.

To connect mezzanine cards 3 to Zone-3 Z3 of the generic carrier 2, two options or a mix of both can be implemented. According to figure 2a, a mezzanine card 3 is connected to a Zone-3 Z3 of a generic carrier 2 by means of assigned and exclusive connector ports (PCI-E, SAS, E1/T1, ...).

According to figure 2b, a mezzanine card 3 is connected to a Zone-3 Z3 of a generic carrier 2 by mean of connector ports which are customized in function of the main functional device type of said mezzanine card.

## Claims

1. Process to design a Rear Transition Module RTM (1) of an Advanced Telecom Computing Architecture ATCA board, said process providing for the designing of a generic carrier (2) and a plurality of mezzanine cards (3), each of said mezzanine cards comprising a main functional device (4) for the RTM module (1), said main functional device being connected to Input/Output ports (5) which are integrated on said mezzanine card and said mezzanine cards further integrating a hot-swappable interface connector (6) to said generic carrier, wherein some of said mezzanine cards are implemented on said generic carrier according to the RTM functionalities needed for the board.

2. Process according to claim 1, **characterized in that** the main functional device (4) is chosen amongst a Serial Attached Small Computer System Interface SAS expander (4a), a Giga Ethernet controller GE NIC (4b), a SAS Hard Disk Drive HDD (4c), a Solid State Drive SSD controller (4d), a E1/T1 transformer (4e).

3. Process according to claim 1 or 2, **characterized in that** at least one mezzanine card (3) further integrates a hardware management device (7) connected to the hot-swappable interface connector (6).

4. Process according to any of claims 1 to 3, **characterized in that** at least one mezzanine card (3) further comprises a DC/DC converter (8) integrated between the hot-swappable interface connector (6) and the main functional device (4).

5. An Advanced Telecom Computing Architecture ATCA Rear Transition Module RTM (1) comprising a generic carrier (2) on which mezzanine cards (3) are implemented, each of said mezzanine cards comprising a main functional device (4) for the RTM module (1) and a hot-swappable interface connector (6), said main functional device being both connected to said generic carrier by means of the hot swappable interface connector (6) and to Input/Output ports (5) which are integrated on said mezzanine card.

6. An Advanced Telecom Computing Architecture ATCA Rear Transition Module RTM (1) according to claim 5, **characterized in that** four mezzanine cards (3) are implemented on the generic carrier (2).

7. An Advanced Telecom Computing Architecture ATCA Rear Transition Module RTM (1) according to claim 5 or 6, **characterized in that** at least one mezzanine card (3) is connected to a Zone-3 (Z3) of the generic carrier (2) by means of assigned and exclusive connector ports.

8. An Advanced Telecom Computing Architecture ATCA Rear Transition Module RTM (1) according to any of claims 5 to 7, **characterized in that** at least one mezzanine card (3) is connected to a Zone-3 (Z3) of the generic carrier (2) by means of connector ports which are customized in function of the main functional device type of said mezzanine card.

9. An Advanced Telecom Computing Architecture ATCA board integrating an Advanced Telecom Computing Architecture ATCA Rear Transition Module RTM (1), said module comprising a generic carrier (2) on which mezzanine cards (3) are implemented, each of said mezzanine cards comprising a main functional device (4) for the RTM module (1) and a hot-swappable interface connector (6), said main functional device being both connected to said generic carrier by mean of the hot swappable interface connector (6) and to Input/Output ports (5) which are integrated on said mezzanine card.
